# EUROPÄISCHE PATENTSCHRIFT

(11) **EP 1 889 022 B1**
(45) Veröffentlichungstag und Bekanntmachung des Hinweises auf die Patenterteilung: **08.09.2010**
(21) Anmeldenummer: 06755120.0
(22) Anmeldetag: 10.05.2006
(51) Int. Cl.: G01L 7/08

(54) **HYDRAULISCHER DRUCKMITTLER**
HYDRAULIC PRESSURE TRANSMITTER
CAPTEUR DE PRESSION HYDRAULIQUE

(30) Priorität: 10.06.2005 DE 102005027035
(43) Veröffentlichungstag der Anmeldung: 20.02.2008
(73) Patentinhaber: Endress+Hauser GmbH+Co. KG, 79689 Maulburg (DE)
(72) Erfinder: DANNHAUER, Wolfgang, 14513 Teltow (DE); NÜRNBERGER, Ralf, 14473 Potsdam (DE); THAM, Anh, Tuan, 10243 Berlin (DE)
(74) Vertreter: Andres, Angelika Maria
(86) Internationale Anmeldenummer: PCT/EP2006/062200
(87) Internationale Veröffentlichungsnummer: WO 2006/131434

(56) Entgegenhaltungen:
- EP-A- 1 114 987
- DE-A1- 10 036 433
- DE-A1- 10 152 681
- DE-A1- 10 162 044
- DE-C1- 19 946 234
- US-A- 4 458 537
- US-A- 4 924 701
- US-A- 5 029 478
- US-A- 5 495 768

## Beschreibung

Die vorliegende Erfindung betrifft einen hydraulischen Druckmittler mit einem Grundkörper mit einen Membranbett an einer Oberfläche des Grundkörpers, einer Trennmembran, die in ihrem Randbereich unter Einschluss eines Hohlraums an dem Grundkörper befestigt ist, und einem hydraulischen Pfad, der mit dem Hohlraum durch eine Öffnung in der Oberfläche des Grundkörpers kommuniziert, wobei der Hohlraum und der hydraulische Pfad mit einer Übertragungsflüssigkeit gefüllt sind.

Druckmittler dieser Art sind grundsätzlich bekannt, und der Stand der Technik umfasst eine Vielfalt von Gestaltungen der Trennmembranen, die für unterschiedlichste Bedingungen optimiert sind.
Die Offenlegungsschriften DE 101 52 681 A1 und DE 101 62 044 A1 offenbaren jeweils einen Druckmittler mit einer Trennmembran, mit einem auslenkbaren Qberflächenzentralbereich, welcher ringförmige Wellen aufweist, wobei der Oberflächenzentralbereich gegenüber einem ihn umgebenden Randbereich vertieft ist.
Das Patent US 4,924,701 offenbart einen Präzisionsdrucksensor, der für hochpräzise Druckmessungen in Öllagern vorgesehen ist. Der Drucksensor umfasst eine Trennmembran zur Begrenzung eines Gasvolumens, dessen druckabhängige dielektrische Eigenschaften als Maß für den an der Trennmembran anstehenden Druck zu erfassen sind. Die Trennmembran weist eine umlaufende Sicke auf. Aufgrund des Beschriebenen Einsatzgebietes ist nur von langsamsten Temperaturänderungen für den Drucksensor auszugehen.

Beispielsweise ist aus der DE 100 31 120 A1 ein Druckmittler bekannt, der einen temperaturabhängigen Trennmembranfehler minimieren bzw. eliminieren soll. Der Trennmembranfehler bezeichnet den Druck in der Übertragungsflüssigkeit aufgrund der elastischen Verformung der Trennmembran, die sich aus der temperaturabhängigen Volumenänderung der Übertragungsflüssigkeit ergibt. Die DE 100 31 120 A1 offenbart beispielsweise einen Druckmittler mit einer napfförmigen Trennmembran, die einen ebenen Randbereich zum Befestigen der Trennmembran an einem Grundkörper und einen gegenüber dem Randbereich vertieften leicht gewellten Zentralbereich aufweist. Zwischen dem Randbereich und dem Zentralbereich verläuft ein geneigter Übergangsbereich, der beide miteinander verbindet. Die Trennmembran und der Grundkötper sind dergestalt aufeinander abgestimmt, dass sich die Gleichgewichtslage der Trennmembran temperaturabhängig verändert, und zwar in solcher Weise, dass das resultierende Volumen in dem Hohlraum zwischen der Trennmembran und dem Grundkörper dem temperaturabhängigen Volumen der Übertragungsflüssigkeit entspricht. Dies wird unter anderem dadurch erreicht, dass der Grundkörper einen größeren Wärmeausdehnungskoeffizienten aufweist als die Trennmembran Wenngleich der beschriebene Stand der Technik gemäß der DE 100 31 120 A1 für thermische Gleichgewichtssituationen interessant sein mag, so kann es bei Temperaturdifferenzen zwischen dem Grundkörper und der Trennmembran, die beispielsweise nach CIP-Reinigungen mit Heißdampf und anschließender Befüllung mit kalten Medien auftreten können, zu großen Spannungen in der Membran kommen, welche eine permanente Nullpunktverschiebung und somit einen Messfehler bewirken. Dies liegt nicht zuletzt daran dass der Übergangsbereich eine relativ steife Kopplung zwischen Randbereich und Zentralbereich bewirkt, mit der die jeweilige temperaturabhängige Gleichgewichtslage der Trennmembran als Zwangsbedingung vorgegeben werden soll.

Das Problem der CIP Reinigung von Membranen und die resultierende Hysterese ist beispielsweise in dem U.S. Patent Nr. 5,495,768 angesprochen. Demnach werde aufgrund des Impulses des auftreffenden Reinigungsmediums die Übertragungsflüssigkeit unter der Trennmembran verschoben was zu Ausbeulungen planarer Membranen und permanenten Verformungen der Fügestellen der Membranen am Grundkörper führte. Es ist zu bezweifeln, dass diese Beschreibung der Ursachen für die permanenten Verformungen tatsächlich zutreffend bzw. vollständig ist, denn Temperaturgradienten finden hier keine ausreichende Beachtung. Als Lösungsvorschlag offenbart die genannte Schrift jedenfalls auch einen Druckmittler mit einer napfförmigen Trennmembran, die einen ebenen Randbereich zum Befestigen der Trennmembran an einem Grundkörper und einen gegenüber dem Randbereich vertieften leicht gewellten Zentralbereich aufweist. Zwischen dem Randbereich und dem Zentralbereich verläuft ein geneigter Übergangsbereich, der beide miteinander verbindet. Der Grundkörper hat eine weitgehend kongruente Oberfläche mit einem ebenen ringförmigen Randbereich, einem tiefer liegenden leicht gewellten Zentralbereich und einem dazwischen liegenden geneigten ringförmigen Übergangsbereich. Der Randbereich der Trennmembran ist mittels eines Lots vollflächig mit dem Randbereich der Oberfläche des Grundkörpers verbunden. Zur Entlastung des Randbereichs ist der Übergangsbereich sehr steif. D.h, bei einer Auslenkung der Trennmembran zur Aufnahme eines verschobenen Ölvolumens wird der Übergangsbereich und der durch diesen geschützte Randbereich kaum ausgelenkt. Die Verformung findet ausschließlich im Zentralbereich der Trennmembran statt.

Es mag dahinstehen, ob mit dem beschriebenen Ansatz die gewünschte Entlastung der Fügestelle erzielt wird. Zur Aufnahme von Ölvolumina sind dabei jedoch solche Auslenkungen der Trennmembran erforderlich, die einer plastische Verformung und damit eine Nullpunktverschiebung bewirken können. Die erforderlichen großem Auslenkungen im Zentralbereich ergeben sich nicht zuletzt aus der Steifigkeit des Übergangsbereichs, die eine Auslenkung der volumeneffizienten Zonen des Zentralbereichs, also der Ringzonen mit großen Radien, limitiert.

Es ist daher die Aufgabe der vorliegenden Erfindung einen Druckmittler bereitzustellen der die Nachteile des beschriebenen Stands der Technik überwindet.

Die Aufgabe wird erfindungsgemäß gelöst durch den Druckmittler gemäß des Patentanspruchs 1.

Der erfindungsgemäße hydraulische Druckmittler umfasst

einen Grundkörper, welcher eine im wesentlichen Wesentlichen axialsymmetrischen napfförmigen Oberfläche aufweist mit

einem ebenen ringförmigen Oberflächenrandbereich;

einem gegenüber dem Oberflächenrandbereich vertieften Oberflächenzentralbereich, der von dem Qberflächenrandbereich umgeben ist: und einem ringförmigen Oberflächenübergangsbereich, der auf seiner Innenseite an den Oberflächenzentralbereich und auf seiner Außenseite an den Oberflächenrandbereich anschließt;

eine im Wesentlichen axialsymmetrische napfförmige Trennmembran, mit einem ebenen ringförmigen Trennmembranrandbereich und einen gegenüber dem Trennmembranrandbereich vertieften Trennmembranzentralbereich, wobei der Trennmembranzentralbereich ringförmige Wellen aufweist;
einem ringförmigen Trerinmembranübergangsbereich, der auf seiner Innenseite an den Trennmembranzentralbereich und auf seiner Außenseite an den Trennmembranrandbereich anschließt;

wobei die Trennmembran innerhalb des Trennmembranrandbereichs entlang einer umlaufenden Fügestelle mit dem Oberflächenrandbereich unter Einschluss eines Hohlraums verbunden ist, welcher mit einer Übertragungsflüssigkeit gefüllt ist, wobei der Hohlraum durch eine Öffnung in der Oberfläche des Grundkörpers mit einem hydraulischen Pfad kommuniziert; wobei erfindungsgemäß

der Trennmembranübergangsbereich eine ringförmige Sicke mit einer Sickenaußenseite, einer Sickeninnenseite und einer Sickenübergangszone umfasst, wobei die Sickenaußenseite eine erste ringförmige geneigte Fläche aufweist, die an den Trennmembranrandbereich anschließt, die Sickeninnenseite eine zweite ringförmige geneigte Fläche umfasst, die an den Trennmembranzentralbereich anschließt und die Sickenübergangszone zwischen der ersten und der zweiten geneigten Fläche verläuft, wobei der Oberflächenübergangebereich asymmetrisch gestaltet ist, und zwar in der Weise, dass der Abfall vom Oberflächenrandbereich zum Oberflächenübergangsbereich steiler ist als der Anstieg vom Oberflächenübergangsbereich zum Oberflächenzentralbereich,

Die erste geneigte Fläche weist vorzugsweise gegenüber einer Ebene senkrecht zur Symmetrieachse der Trennmembran eine maximale Neigung von mindestens 15° weiter bevorzugt mindestens 20° und besonders bevorzugt mindestens 25° auf. Die zweite geneigte Fläche weist vorzugsweise gegenüber einer Ebene senkrecht zur Symmetrieachse der Trennmembran eine maximale Neigung von mindestens 20° weiter bevorzugt mindestens 25° und besonders bevorzugt mindestens 30° auf.

Der Winkel zwischen der maximalen Neigung der ersten geneigten Fläche und der maximalen Neigung der zweiten geneigten Fläche gemessen in einer Ebene entlang der Symmetrieachse der Trennmembran beträgt vorzugsweise mindestens 35°, weiter bevorzugt mindestens 45° und besonders bevorzugt mindestens 55°.

Die Neigung der ersten geneigten Fläche ist vorzugsweise größer, bevorzugt mindestens 5° größer und besonders bevorzugt mindestens 10° größer als die Neigung der zweiten geneigten Fläche.

Der Trennmembranzentralbereich kann ringförmige Wellen mit einer Amplitude in axialer Richtung von beispielsweise etwa 0,08 mm bis 0,25 mm aufweisen. Der radiale Abstand zwischen den Maxima benachbarter Wellenzüge beträgt vorzugsweise nicht weniger als 1,75 mm, weiter bevorzugt nicht weniger als 2,25 mm, und besonders bevorzugt nicht weniger als 2,75 mm. Der radiale Abstand zwischen den Maxima benachbarter Wellenzüge beträgt vorzugsweise nicht mehr als 5 mm, weiter bevorzugt nicht mehr als 4 mm, und besonders bevorzugt nicht mehr als 3,5 mm. In einer derzeit bevorzugten Ausgestaltung beträgt der radiale Abstand etwa 3 mm....

Die Tiefe des Trennmembranzentralbereichs gegenüber dem Trennmembranrandbereich beträgt vorzugsweise nicht weniger als 0,175 mm, weiter bevorzugt nicht weniger als 0,225 mm, und besonders bevorzugt nicht weniger als 0,275 mm. Die Tiefe des Trennmembranzentralbereichs gegenüber dem Trennmembranrandbereich beträgt vorzugsweise nicht mehr als 0,6 mm, weiter bevorzugt nicht weniger als 0,45 mm, und besonders bevorzugt nicht weniger als 0,35 mm. Die Tiefe des Trennmembranzentralbereichs gegenüber dem Trennmembranrandbereich beträgt in einer derzeit bevorzugten Ausgestaltung etwa 0,3 mm.....

Die Tiefe des Minimums der Sickenübergangszone gegenüber dem Trennmembranzentralbereich beträgt vorzugsweise nicht weniger als 0,25 mm, weiter bevorzugt nicht weniger als 0,35 mm und besonders bevorzugt nicht weniger als 0,45 mm. Die Tiefe des Minimums der Sickenübergangszone gegenüber dem Trennmembranzentralbereich beträgt vorzugsweise nicht mehr als 0,75 mm, weiter bevorzugt nicht mehr als 0,65 mm und besonders bevorzugt nicht weniger als 0,55 mm. In einer derzeit bevorzugten Ausgestaltung der Erfindung beträgt die Tiefe des Minimums der Sickenübergangszone etwa 0,5 mm.

In einer weiteren Ausgestaltung der Erfindung weist die napfförmige Oberfläche des Grundkörpers ein Membranbett mit einer Kontur auf, auf welcher die Trennmembran abgeprägt ist. Die Trennmembran kann dann eine Membrankontur aufweisen, die im wesentlichen durch die Kontur des Membranbetts vorgegeben ist und dieser weitgehend entspricht. Aufgrund der elastischen Rückstellung der Trennmembran nach der Prägung und/oder der Steifigkeit des Trennmembranmaterials können die Amplituden der Kontur der Trennmembran in einige Bereichen ggf. geringer ausfallen als die Amplituden der Kontur des Membranbetts in den entsprechenden Bereichen.

Der hydraulische Druckmittler umfasst gemäß dieser Ausgestaltung der Erfindung

einen Grundkörper, welcher eine im wesentlichen Wesentlichen axialsymmetrischen napfförmige Oberfläche aufweist mit

einem ebenen ringförmigen Oberflächenrandbereich;

einem gegenüber dem Oberflächenrandbereich vertieften Oberflächenzentralbereich, der von dem Oberflächenrandbereich umgeben ist; und einem ringförmigen Oberflächenübergangsbereich, der auf seiner Innenseite an den Oberflächenzentralbereich und auf seiner Außenseite an den Oberflächenrandbereich anschließt;

eine im Wesentlichen axialsymmetrische napfförmige Trennmembran, mit einem ebenen ringförmigen Trennmembranrandbereich und einen gegenüber dem Trennmembranrandbereich vertieften Trennmembranzentralbereich und; und einem ringförmigen Trennmembranübergangsbereich, der auf seiner Innenseite an den Trennmembranzentralbereich und auf seiner Außenseite an den Trennmembranrandbereich anschließt;

wobei die Trennmembran im Trennmembranrandbereich entlang einer umlaufenden Fügestelle mit dem Oberflächenrandbereich unter Einschluss eines Hohlraums verbunden ist, welcher mit einer Übertragungsflüssigkeit gefüllt ist, wobei der Hohlraum durch eine Öffnung in der Oberfläche des Grundkörpers mit einem hydraulische Pfad kommuniziert; und

die Trennmembran auf der napfförmigen Oberfläche des Grundkörpers abgeprägt ist; wobei ferner

der Oberflächenübergangsbereich eine ringförmige Vertiefung mit einer Vertiefungsaußenseite, einer Vertiefungsinnenseite und einer Vertiefungsübergangszone umfasst, wobei die VertiefungsauBenseite eine erste ringförmige geneigte Fläche aufweist, die an den Oberflächenrandbereich anschließt, die Vertiefungsinnenseite eine zweite ringförmige geneigte Fläche umfasst, die an den Oberflächenzentralbereich anschließt, und die Vertiefungsübergangszone zwischen der ersten und der zweiten geneigten Fläche verläuft.

Die erste geneigte Fläche weist vorzugsweise gegenüber einer Ebene senkrecht zur Symmetrieachse der napfförmigen Oberfläche eine maximale Neigung von mindestens 15° weiter bevorzugt mindestens 20° und besonders bevorzugt mindestens 25° auf. Die zweite geneigte Fläche weist vorzugsweise gegenüber einer Ebene senkrecht zur Symmetrieachse der napfförmigen Oberfläche eine maximale Neigung von mindestens 20° weiter bevorzugt mindestens 25° und besonders bevorzugt mindestens 30° auf.

Der Winkel zwischen der maximalen Neigung der ersten geneigten Fläche und der maximalen Neigung der zweiten geneigten Fläche gemessen in einer entlang der Symmetrieachse der napfförmigen Oberfläche beträgt vorzugsweise mindestens 35°, weiter bevorzugt mindestens 45° und besonders bevorzugt mindestens 55°.

Die Neigung der ersten geneigten Fläche ist vorzugsweise größer, bevorzugt mindestens 5° größer und besonders bevorzugt mindestens 10° größer als die Neigung der zweiten geneigten Fläche.

Der Oberflächenzentralbereich kann ringförmige Wellen mit einer Amplitude in axialer Richtung von beispielsweise 0,08 mm bis 0,25 mm aufweisen. Der radiale Abstand zwischen den Maxima benachbarter Wellenzüge beträgt vorzugsweise nicht weniger als 1,75 mm, weiter bevorzugt nicht weniger als 2,25 mm, und besonders bevorzugt nicht weniger als 2,75 mm. Der radiale Abstand zwischen den Maxima benachbarter Wellenzüge beträgt vorzugsweise nicht mehr als 5 mm, weiter bevorzugt nicht mehr als 4 mm, und besonders bevorzugt nicht mehr als 3,5 mm. In einer derzeit bevorzugten Ausgestaltung beträgt der radiale Abstand etwa 3 mm. ...

Die Tiefe des Oberflächenzentralbereichs gegenüber dem Oberflächenrandbereich beträgt vorzugsweise nicht weniger als 0,1775 mm, weiter bevorzugt nicht weniger als 0,225 mm, und besonders bevorzugt nicht weniger als 0,275 mm. Die Tiefe des Oberflächenzentralbereichs gegenüber dem. Oberflächenrandbereich beträgt vorzugsweise nicht mehr als 0,6 mm, weiter bevorzugt nicht weniger als 0,45 mm, und besonders bevorzugt nicht weniger als 0,35 mm. Die Tiefe des Oberflächenzentralbereichs gegenüber dem Oborflächenrandbereich beträgt in einer derzeit bevorzugten Ausgestaltung etwa 0,3 mm. ....

Die Tiefe des Minimums der Vertiefungsübergangszone gegenüber dem Trennmembranzentralbercich beträgt vorzugsweise nicht weniger als 0,25 mm, weiter bevorzugt nicht weniger als 0,35 mm und besonders bevorzugt nicht weniger als 0,45 mm. Die Tiefe des Minimums der Vertiefungsübergangszone gegenüber dem Trennmembranzentralbereich beträgt vorzugsweise nicht mehr als 0,75 mm weiter bevorzugt nicht mehr als 0,65 mm und besonders bevorzugt nicht weniger als 0,55 mm. In einer derzeit bevorzugten Ausgestaltung der Erfindung beträgt die Tiefe des Minimums der Vertiefungsübergangszone etwa 0,5 mm.

Der Grundkörper weist vorzugsweise einen metallischen Werkstoff, beispielsweise Edelstahl, Inconel, Hastelloy, andere Legierungen oder Aluminium auf. Die Trennmembran weist vorzugsweise ebenfalls einen metallischen Werkstoff auf beispielsweise Edelstahl, Inconel, Hastelloy, andere Legierungen oder Tantal auf.

Die Erfindung wird nun an einem in den Zeichnungen dargestellten Ausführungsbeispiel erläutert. Es zeigt:

Fig. 1: einen schematischen Längsschnitt durch den Randbereich eines erfindungsgemäßen Druckmittlers; und

Fig. 2: eine Detailansicht eines Längsschnitts durch das Membranbett eines erfindungsgemäßen Druckmittlers.

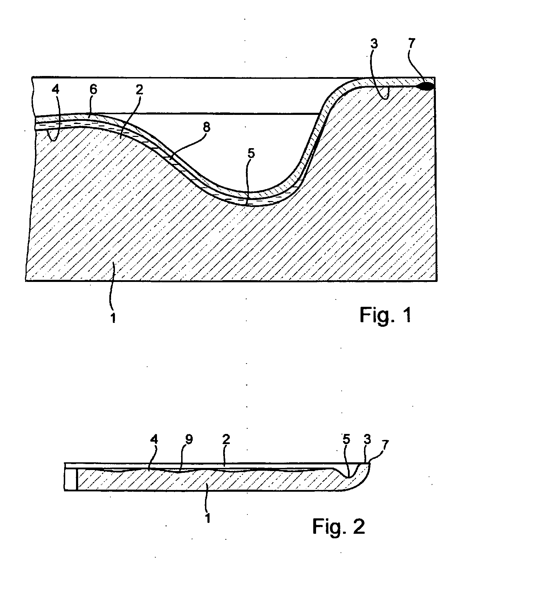

Der in Fig. 1 dargestellte hydraulische Druckmittler umfasst einen Grundkörper 1, der eine im wesentlichen Wesentlichen axialsymmetrischen napfförmigen Oberfläche 2 aufweist mit

einem ebenen ringförmigen Oberflächenrandbereich 3 und einem gegenüber dem Obedlächenrandbereich 3 vertieften Oberflächenzentralbereich 4, der von dem Oberflächenrandbereich 3 umgeben. Weiterhin ist ein ringförmiger Oberflächenübergangsbereich 5 zu erkennen, der auf seiner Innenseite an den Oberflächenzentragbereich 4 und auf seiner Außenseite an den Oberflächenandbereich 3 anschließt Der Oberflächenübergangsbereich ist erfindungsgemäß asymmetrisch gestaltet, und zwar in der Weise, dass der Abfall vom Oberflächenrandbereich zum Oberflächenübergangsbereich steiler ist als der Anstieg vom Oberflächenübergangsbereich zum Oberflächenzentralbereich.

Der Druckmittler umfasst ferner eine napfförmige Trennmembran 6, die entlang einer umlaufenden Schweißnaht 7 oder Lotverbindung mit dem Oberflächenrandbereich 3 verbunden und auf der napfförmigen Oberfläche abgeprägt ist.

Zwischen der Trennmembran 6 und der Oberfläche 2 des Grundkörpers1, ist ein Hohlraum 8 ausgebildet, welcher mit einer Übertragungsflüssigkeit gefüllt ist. Der Hohlraum dient als Druckkammer und kommuniziert über eine hier nicht dargestellte Öffnung in der Oberfläche des Grundkörpers mit einem hydraulischen Pfad, um den an der Trennmembran anstehenden Druck zu einer Druckmesszelle zu übertragen.

In der Darstellung der Fig. 1 ist ein radial einwärts gelegener Bereich des Druckmittlers, der links an das Bild anschließen würde weggelassen. In diesem Bereich weisen das Membranbett und die darauf abgeprägte Trennmembran ein ringförmiges Wellenmuster auf. Die Größenverhältnisse zwischen diesem Wellenmuster 9 und dem Oberflächenübergangsbereich sind besser in Fig. 2 zu erkennen. Demnach weisen die ringförmigen konzentrischen Wellen im Oberflächenzentralbereich wesentlich flachere Konturen auf als der Oberflächenübergangsbereich am Rand. Im Ausführungsbeispiel beträgt der axiale Hub zwischen Wellentälern und Wellenbergen etwa 0,14 mm bei einem radialen Abstand von mehr als 3 mm zwischen benachbarten Wellenbergen. Die gewählte Wellenkontur ermöglicht einen ausreichenden Volumenhub der Trennmembran, ohne diese unmäßig zu versteifen.

Die Erfindungsgemäßen Druckmittler wurden im Vergleich zu Druckmittlern nach dem Stand der Technik, deren Trennmembran keine Sicke aufwies, mehreren Temperaturschocks ausgesetzt. Die Druckmittler nach dem Stand der Technik wiesen danach eine Nullpunktverschiebung von etwa 1,2 mbar auf während die erfindungsgemäßen Druckmittler eine Nullpunktverschiebung zwischen 0,2 und 0,4 mbar aufwiesen. Tendenziell war die Nullpunktverschiebung bei erfindungsgemäßen Druckmittlern mit einer asymmetrisch gestalteten Übergangszone geringer als bei erfindungsgemäßen Druckmittlern mit einer symmetrisch gestalteten Übergangszone.

## Patentansprüche

1. Hydraulischer Druckmittler, umfassend:
einen Grundkörper (1), welcher eine im Wesentlichen axialsymmetrische napfförmige Oberfläche aufweist mit
einem ringförmigen Oberflächenrandbereich (3);
einem gegenüber dem Oberflächenrandbereich vertieften Oberflächenzentralbereich (4), der von dem Oberflächenrandbereich (3) umgeben ist; und einem ringförmigen Oberflächenübergangsbereich (5), der auf seiner Innenseite an den Oberflächenzentralbereich (4) und auf seiner Außenseite an den Oberflächenrandbereich anschließt;
eine im Wesentlichen axialsymmetrische napfförmige Trennmembran (6), mit einem ebenen ringförmigen Trennmembranrandbereich und einen gegenüber dem Trennmembranrandbereich vertieften Trennmembranzentralbereich, wobei der Trennmembranzentralbereich ringförmige Wellen aufweist;
einem ringförmigen Trennmembranübergangsbereich, der auf seiner Innenseite an den Trennmembranentralbereich und auf seiner Außenseite an den Trennmembranrandbereich anschließt;
wobei die Trennmembran (6) innerhalb des Trennmembranrandbereichs entlang einer umlaufenden Fügestelle (7) mit dem Oberflächenrandboreich (3) unter Einschluss eines Hohlraums (8) verbunden ist, welcher mit einer Übertragungsflüssigkeit gefüllt ist, wobei der Hohlraum durch eine Öffnung in der Oberfläche des Grundkörpers mit einem hydraulischen Pfad kommuniziert;
**dadurch gekennzeichnet, dass**
der Trennmembranübergangsbereich eine ringförmige Sicke mit einer Sickenaußenseite, einer Sickeninnenseite und einer Sickenübergangszone umfasst, wobei die Sickenaußenseite eine erste ringförmige geneigte Fläche aufweist, die an den Trennmembranrandbereich anschließt, die Sickeninnenseite eine zweite ringförmige geneigte Fläche umfasst, die an den Trennmembranzentralbereich anschließt und die Sickenübergangszone zwischen der ersten und der zweiten geneigten Fläche verläuft, wobei der Oberflächenübergangsbereich asymmetrisch gestaltet ist, und zwar in der Weise, dass der Abfall vom Oberflächenrandbereich zum Oberflächenübergangsbereich steiler ist als der Anstieg vom Oberflächenübergangsbereich zum Oberflächenzentralbereich.

2. Druckmittler nach Anspruch 1, wobei die erste geneigte Fläche gegenüber einer Ebene senkrecht zur Symmetrieachse der Trennmembran eine maximale Neigung von mindestens 15° bevorzugt mindestens 20° und besonders bevorzugt mindestens 25° aufweist

3. Druckmittler nach Anspruch 1 oder 2, wobei die zweite geneigte Fläche gegenüber einer Ebene senkrecht zur Symmetrieachse der Trennmembran eine maximale Neigung von mindestens 20° bevorzugt mindestens 25° und besonders bevorzugt mindestens 30° aufweist.

4. Druckmittler nach einem der Ansprüche 1 bis 3, wobei der Winkel zwischen der maximalen Neigung der ersten geneigten Fläche und der maximalen Neigung der zweiten geneigten Fläche gemessen in einer Ebene entlang der Symmetrieachse der Trennmembran mindestens 35°, bevorzugt mindestens 45° und besonders bevorzugt mindestens 55° beträgt.

5. Druckmittler nach einem der Ansprüche 1 bis 4, wobei die Neigung der ersten geneigten Fläche größer, bevorzugt mindestens 5° größer und bevorzugt mindestens 10° größer ist als die Neigung der zweiten geneigten Fläche.

6. Druckmittler nach Anspruch 5, wobei die Amplitude der Ringförmigen Wellen in axialer Richtung etwa 0,08 mm bis 0,25 mm beträgt.

7. Druckmittler nach einem der Ansprüche 1 bis 6, wobei der radiale Abstand zwischen den Maxima benachbarter Wellenzüge nicht weniger als 1,75 mm, bevorzugt nicht weniger als 2,25 mm, und besonders bevorzugt nicht weniger als 2,75 mm beträgt.

8. Druckmittler nach einem der Ansprüche 1 bis 7, wobei der radiale Abstand zwischen den Maxima benachbarter Wellenzüge nicht mehr als 5 mm, bevorzugt nicht mehr als 4 mm, und besonders bevorzugt nicht mehr als 3,5 mm beträgt.

9. Druckmittler nach einem der vorhergehenden Ansprüche, wobei die Tiefe des Trennmembranzentralbereichs gegenüber dem Trennmembranrandbereich nicht weniger als 0,175 mm, bevorzugt nicht weniger als 0,225 mm, und besonders bevorzugt nicht weniger als 0,275 mm beträgt

10. Druckmittler nach einem der vorhergehenden Ansprüche, wobei die Tiefe des Trennmembranzentralbereichs gegenüber dem Trennmembranrandbereich nicht mehr als 0,6 mm, bevorzugt nicht weniger als 0,45 mm, und besonders bevorzugt nicht weniger als 0,35 mm beträgt.

11. Druckmittler nach einem der vorhergehenden Ansprüche, wobei die Tiefe des Minimums der Sickenübergangszone gegenüber dem Trennmembranzentralbereich nicht weniger als 0,45 mm beträgt.

12. Druckmittler nach einem der vorhergehenden Ansprüche, wobei die Tiefe des Minimums der Sickenübergangszone gegenüber dem Trennmembranzentralbereich nicht mehr als 0,75 mm, bevorzugt nicht mehr als 0,65 mm beträgt.

## Claims

1. Hydraulic diaphragm seal comprising:
a meter body (1) exhibiting a primarily axially asymmetric dish-shaped surface with:
an annular surface border area (3);
a surface central area (4) which is lower than the surface border area and which is surrounded by the surface border area (3); and an annular surface transition area (5) the inside of which is connected to the surface central area (4) and the outside of which is connected to the surface border area;
a primarily axially asymmetric dish-shaped process isolating diaphragm (6) with a flat annular process isolating diaphragm border area and a process isolating diaphragm central area which is lower compared to the process isolating diaphragm border area, whereby the process isolating diaphragm central area exhibits annular undulations;
an annular process isolating diaphragm transition area the inside of which is connected to the process isolating diaphragm central area and the outside of which is connected to the process isolating diaphragm border area;
where the process isolating diaphragm (6) within the process isolating diaphragm border area is connected along a circumferential joint (7) to the surface border area (3), creating a hollow cavity (8) which is filled with a transition liquid, **characterized in that** the hollow cavity communicates with a hydraulic path through an opening in the surface of the meter body.
**Characterized in that**:
the process isolating diaphragm transition area comprises a ring-like seam with an outer seam side, an inner seam side and a seam transition zone, where the outer seam side exhibits a first annular inclined surface which is connected to the process isolating diaphragm border area, the inner seam side exhibits a second annular inclined surface which is connected to the process isolating diaphragm central area, and the seam transition zone runs between the first and second inclined surface, where the surface transition area is asymmetrical and designed in such a way that the drop from the surface border area to the surface transition area is steeper than the rise from the surface transition area to the surface central area.

2. Diaphragm seal as per Claim 1, where the first inclined surface vis-à-vis a level vertical to the symmetrical axis of the process isolating diaphragm exhibits a maximum inclination of at least 15°, and preferably at least 20° and most preferably at least 25°.

3. Diaphragm seal as per Claim 1 or 2, where the second inclined surface vis-à-vis a level vertical to the symmetrical axis of the process isolating diaphragm exhibits a maximum inclination of at least 20°, and preferably at least 25° and most preferably at least 30°.

4. Diaphragm seal as per one of the Claims 1 to 3, where the angle between the maximum inclination of the first inclined surface and the maximum inclination of the second inclined surface measured in a level along the symmetrical axis of the process isolating diaphragm is at least 35°, preferably at least 45° and most preferably at least 55°.

5. Diaphragm seal as per one of the Claims 1 to 4 where the slope of the first inclined surface is greater than the slope of the second inclined surface, preferably at least 5° greater and most preferably at least 10° greater.

6. Diaphragm seal as per Claim 5, where the amplitude of the annular undulations in the axial direction is roughly 0.08 mm to 0.25 mm.

7. Diaphragm seal as per one of the Claims 1 to 6, where the radial distance between the maximum neighboring wave trains is not less than 1.75 mm, preferably not less than 2.25 mm and most preferably not less than 2.75 mm.

8. Diaphragm seal as per one of the Claims 1 to 7, where the radial distance between the maximum neighboring wave trains is not more than 5 mm, preferably not more than 4 mm and most preferably not more than 3.5 mm.

9. Diaphragm seal as per one of the previous claims, where the depth of the process isolating diaphragm central area vis-à-vis the process isolating diaphragm border area is not less than 0.175 mm, preferably not less than 0.225 mm and most preferably not less than 0.275 mm.

10. Diaphragm seal as per one of the previous claims, where the depth of the process isolating diaphragm central area vis-à-vis the process isolating diaphragm border area is not more than 0.6 mm, preferably not more than 0.45 mm and most preferably not more than 0.35 mm.

11. Diaphragm seal as per one of the previous claims where the depth of the minimum of the seam transition zone vis-à-vis the process isolating diaphragm central area is not less than 0.45 mm.

12. Diaphragm seal as per one of the previous claims where the depth of the minimum of the seam transition zone vis-à-vis the process isolating diaphragm central area is not more than 0.75 mm, and preferably not more than 0.65 mm.

## Revendications

1. Séparateur hydraulique comprenant :
un corps de base (1), lequel présente pour l'essentiel une surface axisymétrique en forme de cuvette avec
une zone marginale de surface annulaire (3) ;
une zone centrale de surface (4) plus profonde que la zone marginale de surface, laquelle est entourée par la zone marginale de surface (3) ; et une zone de transition de surface (5) annulaire, qui aboute sur sa face intérieure la zone centrale de surface (4) et sur sa face extérieure la zone marginale de surface ;
une membrane de séparation (6) pour l'essentiel axisymétrique en forme de cuvette, avec une zone marginale de membrane de séparation annulaire, plane, et une zone centrale de membrane de séparation plus profonde que la zone marginale de membrane de séparation, la zone centrale de membrane de séparation présentant des ondes annulaires :
une zone de transition de membrane de séparation annulaire, qui aboute sur sa face intérieure la zone centrale de membrane de séparation et sur sa surface extérieure la zone marginale de membrane de séparation ;
la membrane de séparation (6) étant reliée au sein de la zone marginale de membrane de séparation, le long d'une zone de jonction périphérique (7), avec la zone marginale de surface (6) en incluant une cavité (8), laquelle est remplie d'un liquide de transmission, la cavité communiquant avec un circuit hydraulique à travers une ouverture dans la surface du corps de base ;
**caractérisé en ce que**
la zone de transition de membrane de séparation comprenant une nervure annulaire avec une face extérieure de nervure, une face intérieure de nervure et une zone de transition de nervure, la face extérieure de nervure présentant une première surface inclinée annulaire, qui aboute la zone marginale de membrane de séparation, la face intérieure de nervure présentant une deuxième surface inclinée annulaire, qui aboute la zone centrale de membrane de séparation et la zone de transition de nervure s'étendant entre la première et la deuxième surface inclinée, la zone de transition de surface étant conçue de façon asymétrique, et ce de telle manière que la pente descendante de la zone marginale de surface vers la zone de transition de surface soit plus raide que la pente ascendante de la zone de transition de surface vers la zone centrale de surface.

2. Séparateur selon la revendication 1, pour lequel la première surface inclinée présente, par rapport à un plan perpendiculaire à l'axe de symétrie de la membrane de séparation, une inclinaison maximale d'au moins 15°, de préférence d'au moins 20° et particulièrement de préférence d'au moins 25°.

3. Séparateur selon la revendication 1 ou 2, pour lequel la deuxième surface inclinée présente, par rapport à un plan perpendiculaire à l'axe de symétrie de la membrane de séparation, une inclinaison maximale d'au moins 20°, de préférence d'au moins 25° et particulièrement de préférence d'au moins 30°.

4. Séparateur selon l'une des revendications 1 à 3, pour lequel l'angle entre l'inclinaison maximale de la première surface inclinée et l'inclinaison maximale de la deuxième surface inclinée, mesuré dans un plan le long de l'axe de symétrie de la membrane de séparation, s'élève à au moins 35°, de préférence à au moins 45° et particulièrement de préférence à au moins 55°.

5. Séparateur selon l'une des revendications 1 à 4, pour lequel l'inclinaison de la première surface inclinée est supérieur, de préférence supérieur d'au moins 5° et particulièrement de préférence supérieur d'au moins 10° à l'inclinaison de la deuxième surface inclinée.

6. Séparateur selon la revendication 5, pour lequel l'amplitude des ondes annulaires en direction axiale est comprise entre 0,08 mm et 0,25 mm environ.

7. Séparateur selon l'une des revendications 1 à 6, pour lequel la distance radiale entre les maximum de trains d'onde voisins n'est pas inférieure à 1,75 mm, de préférence pas inférieure à 2,25 mm et particulièrement de préférence pas inférieure à 2,75 mm.

8. Séparateur selon l'une des revendications 1 à 7, pour lequel la distance radiale entre les maximum de trains d'onde voisins n'est pas supérieure à 5 mm, de préférence pas supérieure à 4 mm et particulièrement de préférence pas supérieure à 3,5 mm.

9. Séparateur selon l'une des revendications précédentes, pour lequel la profondeur de la zone centrale de membrane de séparation par rapport à la zone marginale de membrane de séparation n'est pas inférieure à 0,175 mm, de préférence pas inférieure à 0,225 mm et particulièrement de préférence pas inférieure à 0,275 mm.

10. Séparateur selon l'une des revendications précédentes, pour lequel la profondeur de la zone centrale de membrane de séparation par rapport à la zone marginale de membrane de séparation n'est pas supérieure à 0,6 mm, de préférence pas supérieure à 0,45 mm et particulièrement de préférence pas supérieure à 0,35 mm.

11. Séparateur selon l'une des revendications précédentes, pour lequel la profondeur du minimum de la zone de transition de nervure par rapport à la zone centrale de membrane de séparation n'est pas inférieure à 0,45 mm.

12. Séparateur selon l'une des revendications précédentes, pour lequel la profondeur du minimum de la zone de transition de nervure n'est pas supérieure à 0,75 mm, de préférence pas supérieure à 0,65 mm.
